# EUROPÄISCHE PATENTSCHRIFT

(11) **EP 2 751 013 B1**
(45) Veröffentlichungstag und Bekanntmachung des Hinweises auf die Patenterteilung: **12.10.2016**
(21) Anmeldenummer: 12769881.9
(22) Anmeldetag: 23.08.2012
(51) Int. Cl.: B66F 3/35, B64F 5/00, B66F 17/00, B66F 3/46

(54) **HEBEVORRICHTUNG FÜR EIN FLUGZEUG**
LIFTING APPARATUS FOR AN AIRCRAFT
DISPOSITIF DE LEVAGE POUR AÉRONEF

(30) Priorität: 29.08.2011 DE 102011118758
(43) Veröffentlichungstag der Anmeldung: 09.07.2014
(73) Patentinhaber: Sefrin, Thomas, 66957 Obersimten (DE)
(72) Erfinder: Sefrin, Thomas, 66957 Obersimten (DE)
(74) Vertreter: Hoppe, Lars
(86) Internationale Anmeldenummer: PCT/DE2012/000859
(87) Internationale Veröffentlichungsnummer: WO 2013/029591

(56) Entgegenhaltungen:
- EP-A2- 1 334 947
- WO-A1-2007/093212
- DE-A1- 2 749 507
- DE-U1- 8 611 650
- US-A- 4 061 310

## Beschreibung

Die vorliegende Erfindung betrifft eine Hebevorrichtung für ein Flugzeug, umfassend zumindest ein aufblasbares Kissen mit mindestens zwei Kammern, wenigstens einen Kompressor und zumindest eine Drucksteuereinrichtung, wobei jede der Kammern mittels eines Schlauchs über die Drucksteuereinrichtung mit dem Kompressor verbunden ist.

Ein Anheben von Flugzeugen mittels Hebevorrichtungen ist im Stand der Technik bekannt. Das Anheben eines Flugzeugs mit Hebevorrichtungen ist insbesondere dann notwendig, wenn das Flugzeug gewartet werden muss oder wenn ein ungewollter Betriebszustand des Flugzeugs, also ein Unfall, auftritt. Ein ungewollter Betriebszustand tritt beispielsweise dann auf, wenn sich ein Flugzeug aufgrund falscher Beladung in einem gekippten Zustand befindet und wieder in einer ordnungsgemäße Position verbracht werden muss. Auch kann es vorkommen, dass ein Fahrwerk beim Landen nicht ausfährt oder beschädigt wird, so dass das Flugzeug mit dem Rumpf oder den Tragflächen zumindest bereichsweise auf dem Boden aufliegt.

Im Stand der Technik sind verschiedene Konstellationen von Fahrwerksschäden bekannt, die ein Anheben des Flugzeugs an jeweils unterschiedlichen Bereichen des Flugzeugs notwendig werden lassen. Dies kann beispielsweise dann der Fall sein, wenn das vordere Fahrwerk eines Flugzeugs zusammengebrochen ist und somit der vordere Bereich des Flugzeugs auf dem Boden oder auf einer Rollbahn aufliegt. Andere häufig vorkommende Konstellationen sind der Verlust oder das Zusammenbrechen eines oder mehrerer Hauptfahrwerke, auch gemeinsam mit dem vorderen Fahrwerk, oder das Landen auf einem unebenen Untergrund abseits einer vorgesehen Landebahn.

Unabhängig von der Ursache des ungewollten Betriebszustands des Flugzeugs ist eine schnelle Bergung solcher Flugzeuge aufgrund der hohen Kosten einer blockierten Landebahn oder eines gesperrten Flughafenbereichs entscheidend. Für Bergungen von Flugzeugen werden variable und vielseitig einsetzbare Flugzeughebevorrichtung benötigt, da die beschriebenen unterschiedlichen Unfallarten bei unterschiedlichsten Flugzeugtypen auftreten können.

Bekannt im Stand der Technik ist beispielsweise ein Anheben von Flugzeugen mittels so genannter "Recovery Jacks", spezieller hydraulischer Hebevorrichtungen, die an vorbestimmten Punkten eines Flugzeugs angebracht werden müssen, um dieses anheben können (DE 10 2006 007 504 A1).

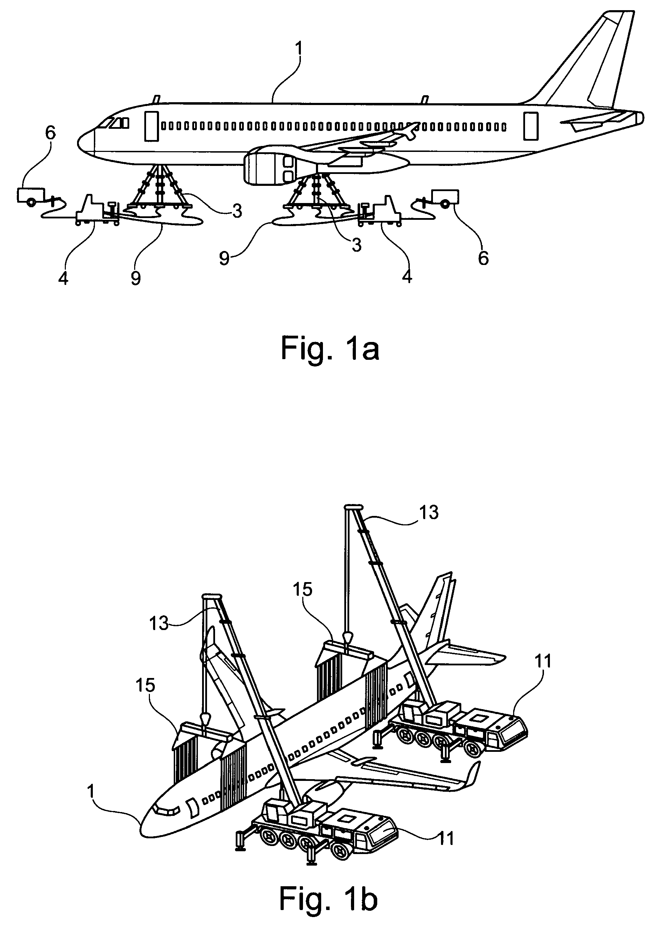

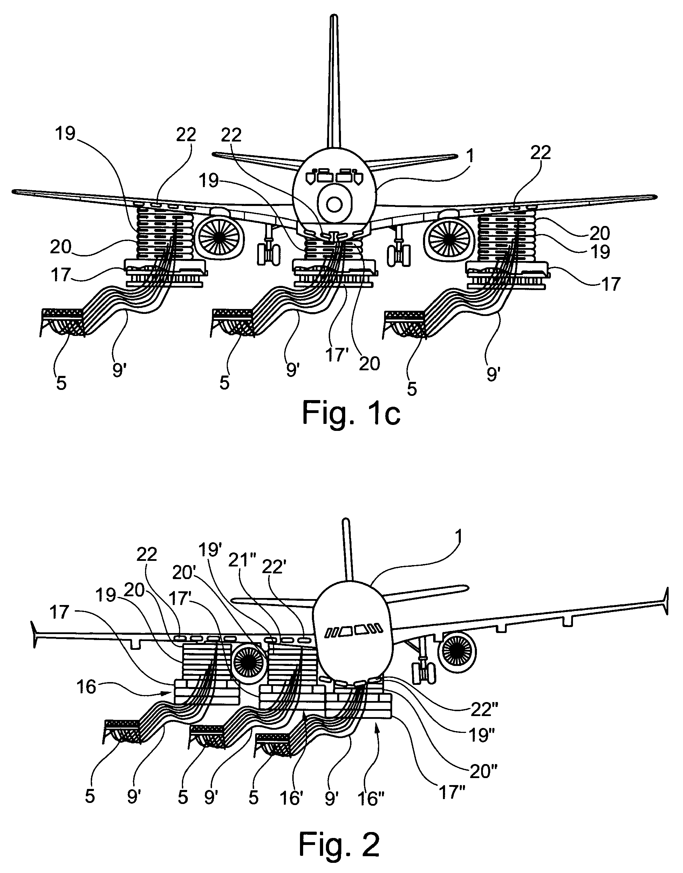

Ein Beispiel eines Anhebens eines Flugzeugs mit besagten Recovery Jacks ist in der Figur 1 a zum Stand der Technik gezeigt. Unterhalb eines Flugzeugs 1 werden mehrere Recovery Jacks 3 angeordnet, die an speziellen, vorbestimmten Punkten (nicht gezeigt)des Flugzeugs 1 angreifen. Für ein kontrolliertes Anheben des Flugzeugs 1 sind Hydraulikaggregate 4 mit einer Hydraulikpumpe und mit einer integrierten Steuerungseinrichtung vorgesehen. Mittels der Hydraulikaggregate 4 und deren integrierten Steuerungseinrichtungen wird das Anheben reguliert, wobei eine Stromversorgung der Hydraulikpumpen durch einen Generator 6 bereitgestellt wird. Dabei sind die Recovery Jacks 3 mittels Schläuchen 9 mit den Hydraulikaggregaten 4 verbunden.

Nachteilig an den bekannten Recovery Jacks ist, dass diese individuell für einen Flugzeugtyp vorgehalten werden müssen. Üblicherweise sind diese nur auf bestimmten Flughäfen vorhanden und müssen oftmals an den Ort des verunglückten Flugzeugs eingeflogen werden. Somit ist ein Anheben mit Recovery Jacks oftmals zeitaufwendig und teuer.

Zum Anheben von Flugzeugen sind im Stand der Technik (US 3 160 288 A) auch Kräne bekannt, siehe Figur 1b zum Stand der Technik. Dabei wird ein Flugzeug 1 mittels zwei Kränen 11 angehoben. Um das Flugzeug 1 anheben zu können sind an Auslegern 13 der Kräne 11 Schlaufen 15 angeordnet, die den Flugzeugrumpf umschließen können. Die Kräne 11 bieten die Möglichkeit, eine Vielzahl von unterschiedlichen Flugzeugtypen (nicht gezeigt) anheben zu können, da die Schlaufen 15 an nahezu jedem Flugzeugtyp angeordnet werden können.

Das Anheben von Flugzeugen mit Kränen ist jedoch aufwendig, da meist mehrere Kräne exakt miteinander koordiniert werden müssen. Die meisten Flugzeuge können durch einen koordinierten Einsatz von 2 bis 4 Kränen vollständig angehoben werden.

Des Weiteren ist ein Anheben von Flugzeugen mittels aufblasbarer Kissen im Stand der Technik bekannt (DE 27 49 507 A1 und DE 86 11 650 U1). Ein Anheben eines Flugzeugs mittels aufblasbarer Kissen ist in Figur 1c zum Stand der Technik dargestellt. In Figur 1c ist ein Flugzeug 1 gezeigt, unter dem drei aufblasbare Kissen 19 angeordnet sind. Jedes der aufblasbaren Kissen 19 urnfasst dabei mehrere Kammer 20, wobei die Kammern 20 jeweils über Schläuche 9' mit Eingabeeinrichtungen 5' verbunden sind. Die Kissen 19 werden unterhalb der anzuhebenden Bereich 22 eines Flugzeugs angeordnet. Durch das Aufblasen der Kissen 19, bzw. der Kammern 20 der Kissen 19, wird das Flugzeug angehoben. Bei Bedarf kann es zudem vorgesehen sein, die Kissen 19 vom Untergrund mittels eines Unterbaus 17 zu beabstanden. Die Kissen 19 haben immer ein vorbestimmte maximale Höhe im voll aufgeblasenen Zustand, so dass bei größeren Flugzeugen gegebenenfalls Unterbauten 17 unter dem Kissen 19 angeordnet werden, um die benötigte Höhe zum Anheben des Flugzeugs zu erreichen. Ein Aufblasen der Kissen 19 erfolgt dabei üblicherweise mittels eines nicht gezeigten Kompressors.

Für ein Anheben eines Flugzeugs mit aufblasbaren Kissen ist es entscheidend, dass diese nur in bestimmten, vom Hersteller vorgegebenen, Bereichen des Flugzeugs angeordnet werden dürfen und dass der Druck des Kissen in dem vorbestimmten Bereich beim Anheben des Flugzeugs vom Hersteller vorgegebene Grenzwerte nicht überschreitet. Übersteigt der Druck beim Anheben den vorgegebenen Grenzwert, können Beschädigungen am Flugzeug auftreten. Solche Beschädigungen an Flugzeugen sind aufgrund moderner Werkstoffe schwieriger zu ermitteln, da verstärkt Verbundwerkstoffe oder dergleichen im Flugzeugbau eingesetzt werden, bei denen eine zu hohe Krafteinwirkung ausschließlich zu einer von außen schwer oder nicht sichtbaren Beschädigung der inneren Struktur der betroffen Bereiche führen kann.

Die DE 86 11 650 U1 weist zur Einstellung des Drucks der Hebekissen ein Überstromventil an der Steuereinrichtung auf, mit dem ein vorbestimmter Grunddruck an der Kissenoberfläche einstellbar ist.

Weitere Hebevorrichtungen sind aus DE 34 16 375 A1 und WO 2004/087459 bekannt, die als Hubvorrichtungen ausgebildet sind, wobei die Flugzeuge nach dem Anheben mit diesen Vorrichtungen abtransportiert werden können.

Die Vorrichtungen aus dem Stand der Technik weisen dabei insbesondere den Nachteil auf, dass sie entweder sehr aufwendig sind, wie die Bergung und das Anheben von Flugzeugen mit Kränen, oder für jeden Flugzeugtyp individuell angepasste Vorrichtungen benötigen werden, wie bei den Recovery Jacks. Die bekannten aufblasbaren Kissen sind dagegen kostengünstig und sehr variabel im Einsatz. Nachteilig an den aufblasbaren Kissen ist jedoch, dass nicht sichergestellt ist, dass der Druck gleichmäßig von dem Kissen auf den vorbestimmten Bereich des Flugzeugs wirkt. Ein solcher gleichmäßiger Druck und somit eine gleichmäßige Kraftübertragung ist jedoch notwendig, um Beschädigungen an dem Flugzeug zu vermeiden.

Der Erfindung liegt daher die Aufgabe zugrunde, eine Hebevorrichtung für Flugzeuge zu liefern, die die Nachteile des Stands der Technik überwindet. Insbesondere soll eine Vorrichtung bereitgestellt werden, die eine kontrollierte Kraftübertragung von einer Hebevorrichtung mit aufblasbaren Kissen auf vorbestimmte Bereiche eines Flugzeugs ermöglicht.

Diese Aufgabe wird gelöst durch eine Hebevorrichtung gemäss Anspruch 1. Die erfindungsgemässe Hebevorrichtung umfasst eine druckempfindliche Einrichtung mit zumindest zwei Drucksensoren umfasst. Die druckempflindliche Einrichtung ist zwischen der obersten Kammer des Kissens und dem anzuhebenden Bereich des Flugzeugs angeordnet. Die druckempfindliche Einrichtung besteht aus einer Matte und/oder einem folienartigen Material und die Drucksensoren sind in vorbestimmten, regelmäßigen Abständen auf der druckempfindlichen Einrichtung angeordnet.

Auch ist bevorzugt, dass die Hebevorrichtung zumindest zwei Module umfasst, wobei jedes der Module zumindest zwei Kammern aufweist und die Module lösbar miteinander verbindbar sind.

Erfindungsgemäß ist dabei auch bevorzugt, dass die Drucksensoren der druckempfindlichen Einrichtung, insbesondere zumindest einer der Drucksensor, ausgebildet ist, so dass der oder die Drucksensoren einen maximalen Messwert von 1 Bar, vorzugsweise maximal 0,5 Bar, insbesondere maximal 0,3 Bar, erfassen können, und wobei insbesondere die Drucksensoren der druckempfindlichen Einrichtung in regelmäßigen Abständen in einem Bereich von 10 cm bis 30 cm, wobei vorzugsweise die druckempfindliche Einrichtung direkt in die Oberseite der obersten Kammer eingebracht ist, insbesondere mittels eines Spritzprozesses oder Moldprozesses.

Auch kann vorgesehen sein, dass jeder Drucksensor ein druckempfindliches, piezoresistives Sensorelement umfasst, wobei vorzugsweise die Drucksensoren aus einer dünnen, bedruckten Schaltung bestehen, und wobei die Drucksensoren insbesondere zwei Substratschichten umfassen, vorzugsweise eine Substratschicht aus Polyester und eine Substratschicht aus Polyimid.

Insbesondere ist bevorzugt, dass die druckempfindliche Einrichtung zumindest bereichsweise aus einem kompressiblen Material besteht und zumindest zwei Magnete oder magnetischen Partikel umfasst, wobei die Magneten oder magnetischen Partikeln durch eine Kompression oder Ausdehnung der druckempfindlichen Einrichtung bewegt werden, so dass eine Änderung des durch die Magneten oder magnetischen Partikeln erzeugten Magnetfeldes auftritt, wobei diese Änderungen repräsentativ für eine Veränderung des Drucks beim Anheben des Flugzeugs ist.

Dabei kann vorgesehen sein, dass zumindest ein Magnetsensor, beispielsweise ein Hall-Sensor umfasst ist, um die Veränderung des magnetischen Feldes zu messen, wobei die Magnete oder magnetischen Partikel und der Magnetsensor insbesondere einen Drucksensor ausbilden, und wobei vorzugsweise die druckempfindliche Einrichtung eine geschäumte Matte umfasst, wobei der Kunststoff-Schaum die Magneten oder magnetischen Partikeln und den Magnetsensor umfasst.

Insbesondere kann es sich als vorteilhaft erweisen, dass eine Datenverarbeitungseinrichtung Messwerte der druckempfindlichen Einrichtung, insbesondere der Drucksensoren der druckempfindliche Einrichtung, eine aktuelle Uhrzeit, ein Datum, eine Temperatur, eine Benutzerkennung, einen Flugzeugtyp und/oder weitere Informationen speichert, wobei vorzugsweise mittels der Datenverarbeitungseinrichtung Informationen über Kennzahlen und -werte verschiedener Flugzeugtypen bereitgestellt werden können und insbesondere die Messwerte der druckempfindlichen Einrichtung mit den Kennzahlen und -werten abgeglichen werden.

Auch kann erfindungsgemäß vorgesehen sein, dass die oberste Kammer der Hebevorrichtung lose Kunststoffkugeln umfasst, so dass sich die oberste Kammer der Kontur des anzuhebenden Bereichs des Flugzeugs anpasst, wobei nach dem Anpassen mittels einer Absaugpumpe die Luft in der obersten Kammer im Wesentlichen entfernt wird, so dass durch den resultierenden Unterdruck eine Fixierung der Kunststoffkugeln erfolgt

Erfindungsgemäß ist dabei auch bevorzugt, dass ein Unterbau umfasst ist, der das aufblasbare Kissen vom Untergrund beabstandet.

Auch kann vorgesehen sein, dass zumindest eine Kammer des aufblasbaren Kissens, insbesondere die oberste oder eine der oberen Kammern, in zumindest zwei, vorzugsweise drei, vier oder sechs, Teilkammern unterteilt ist, wobei die Teilkammern jeweils separat voneinander mit Druckluft beaufschlagt werden können.

Insbesondere ist bevorzugt, dass eine Eingabeeinrichtung zur Ansteuerung der Drucksteuereinrichtung umfasst ist, wobei vorzugsweise mit der Eingabeeinrichtung zumindest zwei getrennte Drucksteuereinrichtungen angesteuert werden können.

Dabei ist bevorzugt, dass die Eingabeeinrichtung als mobile Eingabeeinrichtung ausgebildet ist, und insbesondere drahtlos mit der oder den Drucksteuereinrichtungen kommuniziert.

Auch kann vorgesehen sein, dass eine Anzeigeeinrichtung umfasst ist, die zumindest einen Repräsentanten eines Messwerts zumindest eines Drucksensors der druckempfindliche Einrichtung anzeigt, wobei vorzugsweise die Anordnung der angezeigten Repräsentanten der Messwerte der Drucksensoren auf der Anzeigeeinrichtung mit der räumlichen Anordnung der Drucksensoren in der druckempfindliche Einrichtung korrespondiert.

Erfindungsgemäß kann auch vorgesehen sein, dass ein akustisches und/oder optisches Warnsignal mittels der Anzeigeeinrichtung oder einer weiteren Ausgabeeinrichtung ausgegeben wird, wenn ein Messwert des Drucks einen vorgegeben maximal zulässigen Wert überschreitet, wobei vorzugsweise das Anheben des Flugzeugs kurz vor einem Überschreiten des zulässigen Werts automatisch unterbrochen ist.

Insbesondere kann es sich als vorteilhaft erweisen, dass die Repräsentanten der Messwerte der Drucksensoren der druckempfindliche Einrichtung farbig auf der Anzeigeeinrichtung angezeigt sind, wobei insbesondere die Messwerte in Abhängigkeit vorbestimmter Messbereiche in Grün, Gelb oder Rot angezeigt werden.

Auch kann erfindungsgemäß vorgesehen sein, dass die Position der druckempfindliche Einrichtung relativ zum Flugzeug auf der Anzeigeeinrichtung angezeigt ist, insbesondere die Position aller druckempfindlicher Einrichtungen.

Erfindungsgemäß kann auch vorgesehen sein, dass die Anzeigeeinrichtung mit der Eingabeeinrichtung in einem ausgebildet ist, insbesondere in Form eines Touchscreens, eines Tablet-PCs oder dergleichen.

Schließlich kann auch vorgesehen sein, dass eine Steuerbox umfasst ist, wobei die Steuerbox zwischen dem Kompressor und zumindest einer der Hebevorrichtungen angeordnet ist, und die Steuerbox die Drucksteuereinrichtung, vorzugsweise in Form von Steuerventilen, insbesondere Magnetventile, umfasst, und wobei die Steuerbox eine Notbedienungseinrichtung umfasst, so dass die Drucksteuereinrichtung direkt an der Steuerbox bedient werden kann, wobei die Steuerbox vorzugsweise eine Steuersoftware umfasst.

Der Erfindung liegt somit die überraschende Erkenntnis zugrunde, dass ein zu hoher Druck beim Anheben eines Flugzeugs verhindert werden kann, wenn eine druckempflindliche Einrichtung zwischen einer obersten Kammer eines aufblasbaren Kissens und dem anzuhebenden Bereich des Flugzeugs angeordnet wird. Durch die druckempfindliche Einrichtung kann die Druckverteilung in dem anzuhebenden Bereich des Flugzeugs unmittelbar gemessen und einen Benutzer angezeigt werden, so dass ein kontrolliertes Anheben des Flugzeugs ermöglicht wird.

Das aufblasbare Kissen kann hohe Kräfte bereitstellen, beispielsweise Kräfte von mehr 300 kN, so dass es entscheidend ist, die durch das Kissen bereitgestellten Kräfte gleichmäßig auf einen vorgesehenen Bereich eines Flugzeugs zu übertragen. Vorzugsweise wird die von der Hebevorrichtung benötigten Druckluft dabei mittels eines oder mehrerer Kompressoren bereitgestellt.

Für ein Verhindern eines Überschreitens eines maximal zulässigen Drucks am anzuhebenden Bereich des Flugzeugs ist zum Einen die richtige Dimensionierung des eingesetzten Kissens in seinen geometrischen Ausmaßen entscheidend, da sich der beim Anheben ausgeübte Druck durch das Kissen an dem Flugzeugbereich bekanntlich über den Quotient von Kraft durch Fläche bestimmt. Zum Anderen ist es erforderlich, dass das Kissen eng an den Konturen des anzuhebenden Bereichs des Flugzeugs anliegt. Liegt das Kissen nur bereichsweise an dem Flugzeugrumpf oder den Tragflächen an, wird in den Bereichen, an denen das Kissen anliegt, ein wesentlich höherer Druck auf das Flugzeug ausgeübt als zugelassen, die Kraft also auf bestimmte Teilbereich des anzuhebenden Bereichs konzentriert.

Dabei kann es vorteilhaft sein, wenn die Drucksensoren der druckempfindlichen Einrichtung in regelmäßigen Abständen angeordnet sind. Dabei können die Drucksensoren, insbesondere ein einzelner Drucksensor, derart ausgelegt sein, dass sie einen maximalen Messwert von 1 Bar, vorzugsweise maximal 0,5 Bar, insbesondere maximal 0,3 Bar, erfassen können. Als vorteilhaft hat es sich erwiesen, wenn die Drucksensoren in einem regelmäßigen Abstand von 10 bis 30 cm angeordnet sind und eine Matrix bilden, wobei die Drucksensoren gleichmäßig über nahezu die komplette Oberfläche der Oberseite der obersten Kammer des aufblasbaren Kissens verteilt sind. Somit kann sichergestellt werden, dass die Kraft von dem Kissen gleichförmig auf den anzuhebenden Bereich des Flugzeugs verteilt wird und der Druck zu jederzeit die vorgegebenen Grenzwerte nicht überschreitet.

Beispielsweise kann eine druckempfindliche Einrichtung mit einer Länge von 290 cm und einer Breite von 220 cm vorgesehen sein, die insgesamt 638 Drucksensoren umfasst, die in einem regelmäßigen und identischen Abstand von 10 cm zueinander angeordnet sind. Auch kann es vorgesehen sein, dass bei einer druckempfindlichen Einrichtung mit identischen Ausmaßen 180 Drucksensoren zum Einsatz kommen, wobei diese in einem regelmäßigen und identischen Abstand von 20 cm zueinander angeordnet sind. Alternativ kann auch vorgesehen sein, dass bei einer weiteren druckempfindlichen Einrichtung mit den obigen Ausmaßen 319 Drucksensoren in alternierenden, regelmäßigen Abständen von 10 cm und 20 cm zum Einsatz kommen. Auch kann vorgesehen sein, dass eine druckempfindliche Einrichtung mit den obigen Ausmaßen 158 Drucksensoren umfasst, die in alternierenden, regelmäßigen Abständen von 15 cm und 30 cm angeordnet sind. Es ist eine Vielzahl unterschiedlicher Anordnungsformen der Drucksensoren möglich.

Es kann vorteilhaft sein, dass die druckempfindliche Einrichtung in Form einer Matte, einer Folie oder dergleichen bereitgestellt ist, wobei die Drucksensoren einen integralen Bestandteil bilden. Eine solche Matte oder Folie kann erfindungsgemäß auch mit bereits vorhandenen Hebevorrichtungen für Flugzeuge kombiniert werden, die bislang noch keine erfindungsgemäße druckempfindliche Einrichtung aufweisen. Alternativ kann vorgesehen sein, dass die druckempfindliche Einrichtung direkt in die Oberseite des obersten Kissens eingebracht wird, beispielsweise mittels eines Spritzprozesses oder Moldprozesses.

Vorteilhafterweise können die Drucksensoren ein druckempfindliches, piezoresistives Sensorelement umfassen, wobei die Drucksensoren aus einer dünnen, bedruckten Schaltung bestehen können. Insbesondere kann vorgesehen sein, dass die Drucksensoren zwei Substratschichten, vorzugsweise eine Substratschicht aus Polyester und eine Substratschicht aus Polymid, umfassen. Durch diesen Aufbau der Drucksensoren können diese einfach und kostengünstig in die druckempfindlichen Einrichtung in Form eine Matte oder Folie integriert werden oder direkt in die Oberseite der obersten Kammer des Kissens eingebracht werden.

Alternativ kann vorgesehen sein, dass als Drucksensor Magnete zum Einsatz kommen können. Dabei kann es beispielsweise vorgesehen sein, dass in eine kompressible druckempfindliche Einrichtung, insbesondere in eine druckempfindliche Einrichtung in Form einer Matte oder dergleichen, kleine Magnete eingebracht werden. Durch eine Veränderung des Volumens der druckempfindlichen Einrichtung ändert sich die Position der Magnete und somit das resultierenden Magnetfeld. Mittels einer Sensoreinrichtung, beispielsweise in Form eines Magnetsensors (Hall-Sensor), einer Spule oder dergleichen, kann eine Erfassung des Magnetfeldes erfolgen und die Änderung des Magnetfeldes kann als eine Information für den anliegenden Druck im anzuhebenden Bereich ausgewertet werden.

Bevorzugte Magnete sind sog. Supermagnete aus NdFeB in Scheibenformat mit einer Scheibendicke von 0,8-1,5, vorzugsweise etwa 1 mm und einem Scheibendurchmesser von 5-15, vorzugsweise 6-10 mm. Sie besitzen eine Haftkraft im Bereich von 350- 500g, d.h. sie können einen Gegenstand bis zu einem solchen Gewicht bei horizontaler Ausrichtung der Magnetscheibe fixieren. Dementsprechend liegt die Remanenz B der Magnete in einem Bereich von 1,2-1,5, vorzugsweise 1,3- 1,4 Tesla (T). Das Optimum des Messbereichs derartiger Magnete liegt in einem Messabstand des Magneten vom Sensor in einem Bereich von 8-21 mm, wobei mit zunehmenden Abstand die Feldstärke logarithmisch abnimmt. Für einen Supermagneten der Dicke 1 mm und des Durchmessers D= 6; 8; 10 mm beträgt die Magnetfeldstärke über dem Magnet bei einem Abstand von 17; 21;bzw. 25 mm vom Sensor etwa 1 mT und bei einem Abstand von etwa 7; 9; 11 mm etwa 10 mT, um bei noch kleineren Abständen steil anzusteigen. Aus der Änderung der Magnetfeldstärke lassen sich daher die Druckverhältnisse in der Druckmatte exakt bestimmen.

Als Magnetsensoreinrichtung wird vorzugsweise ein Hallsensor eingesetzt, der eine typische Empfindlichkeit von etwa 5-15, vorzugsweise etwa 10 mV/G (G= Gauss, wobei 10.000 Gauss 1 Tesla entsprechen) und eine output-Bandbreite von 2-20, vorzugsweise etwa 10 kHz aufweist. Der Hallsensor ist üblicherweise auf einer Controller-Platine angeordnet, die in den nachstehend erwähnten Schaum eingebettet ist, wobei sich jeweils auf der gegenüber liegenden Seite der Schaumschicht komplementär ein Magnet in einem vorbestimmten Abstand zum Hallsensor .befindet und dadurch den Drucksensor bildet.

Dabei kann auch vorgesehen sein, dass die druckempfindliche Einrichtung einen Schaum umfasst, wobei in den Schaum die Magnete oder magnetischen Partikel eingebracht sind. Somit kann ein kompressibler Permanentmagnet bereitgestellt werden, wobei mittels Sensoreinrichtungen eine Verteilung und die Änderungen des Magnetfeldes erfasst werden kann. Die Dicke und Kompressibilität der Schaumschicht ist so gewählt, dass sie mindestens 20 mm dick (gemäß einem bevorzugten Beispiel 30 mm dick) ist und bei einem Überdruck von 0,5 Bar um 6-13 mm, vorzugsweise etwa 7-9 mm zusammengedrückt wird. Hierdurch wird ein Messwert zwischen1- 10 mT und mehr am Hall-Sensor erzeugt, wodurch mit dem obigen Hallsensor (Empfindlichkeit 10 mV/G) Messpannungen zwischen,0,1 und 1 V und mehr gemessen werden .können.

Der Aufbau einer druckempfindlichen Einrichtung kann durch die Verbindung der jeweiligen Controller-Platine mit einem zentralen Controller sowie einem A/D-Wandler und einem Bluetooth-Transceiver erfolgen, mit dem die gemessenen Daten per Funk weitergeleitet werden können.

Durch die Sensoreinrichtungen werden gemeinsam mit den Magneten eine Vielzahl von virtuellen Drucksensoren bereitgestellt, wobei diese Sensoreinrichtungen genauso angeordnet werden können wie die oben beschriebenen Drucksensoren.

Für eine gleichmäßige Übertragung der Kräfte der Hebevorrichtung auf den anzuhebenden Bereich des Flugzeugs kann es erfindungsgemäß vorgesehen sein, dass eine Konturenanpassung der Hebevorrichtung an den anzuheben Bereich erfolgt. Die Notwendigkeit einer solchen Konturenanpassung wird beispielsweise daran deutlich, dass eine unter einer Tragfläche eines Flugzeugs angeordnete Hebevorrichtung die Schräge der Tragfläche kompensieren muss, um die Kräfte gleichförmig übertragen zu können. Dies gilt selbstverständlich gleichermaßen für andere Bereiche eines Flugzeugs wie den Rumpf oder die Nase. Dabei kann vorgesehen sein, dass die oberste Kammer des Kissens mit einer Vielzahl loser Kunststoffkugeln gefüllt ist. Selbstverständlich ist es auch denkbar, dass anstelle von Kunststoffkugeln beliebige anderen Materialien zum Einsatz kommen, die für eine solche Konturenanpassung geeignet sind. Diese losen Kunststoffkugeln können sich optimal an verschiedene Oberflächenkonturen anpassen und somit eine gleichförmige Kraftübertragung der Hebevorrichtung ermöglichen. Alternativ kann selbstverständlich auch vorgesehen sein, dass eine Konturenanpassung mittels anderer Einrichtungen erfolgt. Die oberste Kammer wird nicht mit Druckluft beaufschlagt, sondern mittels einer Absaugpumpe wird Luft aus der obersten Kammer entfernt und ein Unterdruck erzeugt. Durch den Unterdruck werden die Kunststoffkugeln in ihrer an den Bereich des Flugzeugs angepassten Form fixiert und bilden eine feste Struktur. Selbstverständlich ist es vorgesehen, dass nach dem Abschluss eines Hebevorgangs die oberste Kammer wieder mit Luft gefüllt wird, so dass die Kunststoffkugeln aus ihrer Fixierung gelöst werden.

Auch kann ein Unterbau vorgesehen sein, der zwischen dem Boden und der Hebevorrichtung angeordnet wird. Unterschiedliche Flugzeugtypen sind unterschiedlich hoch, so dass der Abstand eines anzuhebenden Bereichs von dem Boden variiert. Die Hebevorrichtung kann durch ein Aufblasen des Kissens bzw. der einzelnen Kammern des Kissens immer nur einen maximalen Hub erzeugen. Reicht dieser Hub nicht aus, um den anzuheben Bereich ausreichend anzuheben, kann ein Unterbau zum Einsatz kommen. Der Aufbau des Unterbaus ist dabei variabel. Dabei kann der Unterbau beispielsweise auch aus einem weiteren aufblasbaren Kissen bestehen, wobei auch selbstverständlich eine Vielzahl weiterer Beabstandungseinrichtungen zum Bereitstellen eines Unterbaus dem Fachmann geläufig sind, wie beispielsweise eine Unterbau aus Holz oder dergleichen.

Neben einem engen Anliegen der Hebevorrichtung an dem anzuhebenden Bereich des Flugzeugs ist es entscheidend, dass die Veränderung der Relativposition der Hebevorrichtung zu dem anzuhebenden Bereich beim Anheben berücksichtigt werden kann. Diese Änderung der Relativposition resultiert aus einer Drehung des Flugzeugs beim Anheben. Aufgrund dieser Änderung der Relativposition des Flugzeugs zu dem Kissen kann eine zu große Kraft auf einen Teilbereich des anzuhebenden Bereichs des Flugzeugs wirken und dieses beschädigen. Dies resultiert daraus, dass der am Flugzug anliegende Bereich durch die Veränderung der Relativposition verringert wird und dementsprechend durch die gleichbleibende Kraft der Druck in den Bereichen, in denen das Kissen weiterhin anliegt, ansteigt.

Zur Kompensation der relativen Verschiebung des anzuhebenden Bereichs gegenüber der Hebevorrichtung kann es vorgesehen sein, dass zumindest eine Kammer des aufblasbaren Kissens, insbesondere eine der oberen Kammern oder die oberste Kammer, in zumindest zwei voneinander getrennte Teilbereiche, also Teilkammern, aufgeteilt ist. Dabei kann es vorgesehen sein, dass drei oder sechs Teilkammern ausgebildet sind, die jeweils getrennt mit Druckluft beaufschlagt werden können. Dies führt dazu, dass die sich ändernde Relativposition der Hebevorrichtung gegenüber dem anzuhebenden Bereich beim Anheben kompensiert werden kann, in dem der Hub des aufblasbaren Kissen durch die einen unterschiedlichen Hub der Teilkammern relativ zum anzuhebenden Bereich des Flugzeugs variiert wird.

Für ein solches Kompensieren ist insbesondere die erfindungsgemäße druckempfindliche Einrichtung vorteilhaft. Einem Benutzer, der ein Anheben des Flugzeugs mittels einer Eingabeeinrichtung reguliert, können die an dem anzuhebenden Bereich des Flugzeugs anliegenden Kräfte und Drücke angezeigt werden, so dass er gezielt eine Ansteuerung der Teilkammern vornehmen kann. Durch eine solche Ansteuerung der Teilkammern kann der Hub variiert und ein Anliegen der Hebevorrichtung während des gesamten Hebevorgangs sichergestellt werden. Dies ist insbesondere in der Praxis relevant, da zum Einen der Benutzer einen Sicherheitsabstand zum Flugzeug aufgrund eines Verletzungsrisikos einhalten muss und zum Anderen eine genaue Betrachtung der Verschiebung der Relativposition von Hebevorrichtung und anzuhebendem Bereich aufgrund der geometrischen Ausmaße der Hebevorrichtung und des Flugzeugs schwierig ist.

Erfindungsgemäß kann es auch vorgesehen sein, dass eine Datenverarbeitungseinrichtung mit der Hebevorrichtung in Wirkverbindung steht. Aufgrund versicherungstechnischer Anforderungen muss ein Anheben eines Flugzeugs genau dokumentiert werden, insbesondere auch die anliegenden Kräfte bzw. Drücke am anzuhebenden Bereich. Eine erfindungsgemäße Datenverarbeitungseinrichtung kann beispielsweise neben weiteren Werten die Messwerte der druckempfindlichen Einrichtung, insbesondere der einzelnen Drucksensoren der druckempfindliche Einrichtung, eine aktuelle Uhrzeit, ein Datum, eine Temperatur, einen Flugzeugtyp und/oder eine Benutzerkennung speichern. Dabei kann auch vorgesehen sein, dass in der Datenverarbeitungseinrichtung Kennzahlen und -werte verschiedener Flugzeugtypen gespeichert sind und die Messwerte direkt mit den Kennzahlen und -werten abgeglichen werden.

Auch kann erfindungsgemäß eine Eingabeeinrichtung zur Ansteuerung der Drucksteuereinrichtung umfasst sein, wobei die Eingabeeinrichtung auch zur Ansteuerung von zwei oder mehr Drucksteuereinrichtungen geeignet sein kann. Dies kann insbesondere dann vorteilhaft sein, wenn mehrere Hebevorrichtungen gleichzeitig vom Einsatz kommen, so dass der Benutzer nicht zwischen verschiedenen Eingabeeinrichtungen wechseln muss, sondern kurzfristig mittels einer Eingabeeinrichtung aller relevanten Eingaben vornehmen kann. Dabei kann es insbesondere vorteilhaft sein, wenn die Eingabeeinrichtung als mobile Eingabeeinrichtung ausgebildet ist, und vorzugsweise drahtlos, beispielsweise via WLAN, Bluetooth oder dergleichen, mit der oder den Drucksteuereinrichtungen und gegebenenfalls weiteren Einrichtungen der Hebevorrichtung kommuniziert.

Es kann zudem vorteilhaft sein, wenn die Hebevorrichtung eine Anzeigeeinrichtung umfasst, die zumindest einen Repräsentanten eines Messwerts zumindest eines Drucksensors der druckempfindlichen Einrichtung anzeigt. Dabei kann vorgesehen sein, dass die Anordnung der angezeigten Messwerte der Drucksensoren auf der Anzeigeeinrichtung mit der räumlichen Anordnung der Drucksensoren in der druckempfindlichen Einrichtung korrespondiert. Beispielsweise wird jeder der in einer regelmäßigen Matrix angeordneten Drucksensoren in einer auf der Anzeigeeinrichtung visualisierten Matrix als separater Messwert, oder ein Repräsentant des Messwerts, angezeigt, so dass dem Benutzer eine Darstellung des Drucks an verschiedenen Bereichen des anzuhebenden Bereichs angezeigt wird. Somit kann der Benutzer beispielsweise durch ein gezieltes Ansteuern von Teilkammern des aufblasbaren Kissens , auch ohne Sichtkontakt, die Relativposition der Hebevorrichtung zum anzuhebenden Bereich des Flugzeugs während des Anhebens korrigieren. Dies ist in der Praxis mit einem erheblichen Zeitgewinn und auch Sicherheitsgewinn verbunden.

Auch kann vorgesehen sein, dass ein akustisches und/oder optisches Warnsignal mittels der Anzeigeeinrichtung oder einer weiteren Ausgabeeinrichtung ausgegeben wird, wenn ein Messwert des Drucks einen vorgegeben, maximal zulässigen Wert überschreitet. Dabei können beispielsweise die gemessenen Druckwerte mit den in der Datenverarbeitungseinrichtung hinterlegten und für einen jeweiligen Flugzeugtyp spezifischen Maximalwerten verglichen werden, und so dem Benutzer ein wirksames Hilfsmittel bereitgestellt werden, um Beschädigungen an den anzuhebenden Bereichen zu vermeiden. Des Weiteren kann auch vorgesehen sein, dass das Anheben des Flugzeugs kurz vor dem Überschreiten des zulässigen Werts automatisch unterbrochen wird. Der zulässige Maximalwert des Drucks liegt zwischen 0,1 und 1 Bar, vorzugsweise zwischen 0,2 und 0,5 Bar, insbesondere bei 0,3 Bar.

Insbesondere kann es vorteilhaft sein, wenn die Messwerte der Drucksensoren der druckempfindliche Einrichtung farbig auf der Anzeigeeinrichtung angezeigt sind. Dabei können die Messwerte in Abhängigkeit vorbestimmter Messbereiche in Grün, Gelb oder Rot angezeigt werden, oder selbstverständlich auch in allen anderen Farben. Beispielsweise können Messwerte, die in einem als sicher definierten Messbereich liegen in der Farbe Grün angezeigt werden, während Messwerte, die einen vorgegeben Grenzwert überschreiten, in der Farbe Rot dargestellt sind. Des Weiteren können beliebige Zwischenbereiche definiert werden, die beispielsweise in Gelb oder Orange dargestellt werden, und die repräsentativ für ein Annähern an die vorgegebenen Grenzwerte stehen.

Auch kann es vorgesehen sein, dass die Position der druckempfindlichen Einrichtung relativ zum Flugzeug auf der Anzeigeeinrichtung angezeigt ist. Dies ermöglicht einem Benutzer schnell zu erkennen, in welchem Teilbereich des anzuhebenden Bereichs gegebenenfalls ein Eingreifen geboten erscheint. Dies kann insbesondere dann vorteilhaft sein, wenn mehr als eine Hebevorrichtung eingesetzt wird, so dass der Benutzer schnell erkennt, welcher Druck durch welche Hebevorrichtung an dem oder den anzuhebenden Bereich(en) anliegt. Besonders vorteilhaft kann es daher sein, die Position aller druckempfindlichen Einrichtungen gleichzeitig oder gegebenenfalls sequenziell auf der Anzeigeeinrichtung in ihrer Relativposition zu dem Flugzeug und den anzuhebenden Bereichen darzustellen.

Auch kann die Anzeigeeinrichtung mit der Eingabeeinrichtung in einem ausgebildet sein, insbesondere in Form eines Touchscreens. Dabei kann es vorteilhaft sein, wenn ein Touchpad, Tablet-PC oder dergleichen zum Einsatz kommt, so dass dem Benutzer eine mobile Ein- und Ausgabeeinrichtung bereitgestellt wird. Durch eine solche mobile Ein- und Ausgabeeinrichtung, die insbesondere drahtlos mit den weiteren Einrichtungen der Hebevorrichtung kommuniziert, kann der Benutzer problemlos das Anheben des Flugzeugs von verschiedenen Positionen aus begleiten und die relevanten anzuhebenden Bereiche ständig im Blick haben.

Auch kann es erfindungsgemäß vorgesehen sein, dass eine oder mehrere Drucksteuereinrichtungen in eine erfindungsgemäße Steuerbox integriert sind. Eine erfindungsgemäße Steuerbox kann dafür beispielsweise Steuerventile, insbesondere Magnetventile umfassen. Die Steuerbox kann dabei erfindungsgemäß zwischen einem Kompressor und einer oder mehrerer Hebevorrichtungen angeordnet werden, so dass die Druckluft von dem Kompressor über die Steuerbox reguliert den einzelnen Kammern des aufblasbaren Kissens der Hebevorrichtung zugeführt werden kann. Ebenso kann eine Reduzierung des Drucks durch die Steuerbox verursacht werden. Eine Ansteuerung des Steuerbox erfolgt dabei bevorzugt mittels einer von der Steuerbox getrennt angeordneten Eingabeeinrichtung, die, wie oben bereits beschrieben, mittels WLAN oder dergleichen mit der Steuerbox kommunizieren kann.

Des Weiteren kann eine erfindungsgemäße Steuerbox Notbedienungseinrichtungen umfassen, so dass im Notfall auch eine Steuerung der Hebevorrichtungen direkt an der Steuerbox vorgenommen werden kann.

Eine erfindungsgemäße Steuerbox geht mit einer Vielzahl von Vorteilen einher, wobei auf die Folgenden exemplarisch verwiesen wird. Anstelle einer Vielzahl separater Drucksteuereinrichtungen, wie im Stand der Technik üblich, bereitzustellen und diese jeweils separat mit dem Kompressor und jeweils einem aufblasbaren Kissen zu verbinden, kann die erfindungsgemäße Steuerbox ganz in der Nähe von einem oder mehrerer Kissen angeordnet werden, weil der Benutzer den Hebevorgang mit der von der Steuerbox getrennten Eingabeeinrichtung kontrolliert. Somit kann eine erhebliche Menge an Schlauchmaterial eingespart werden, weil der notwendige Sicherheitsabstand über die getrennte Eingabeeinrichtung bereitgestellt wird und gegebenenfalls nur noch eine Steuerbox mit einer Vielzahl integrierter Drucksteuereinrichtungen für mehrere Hebevorrichtungen zum Einsatz kommt.

Auch kann vorgesehen sein, dass eine Regulierung des Anhebens durch eine in der Steuerbox integrierten Software, beispielsweise eine SPS, unterstützt und zumindest teilweise automatisiert wird. Dabei kann es vorgesehen sein, dass ein Komparator zum Einsatz kommt, der Sollwerte des Drucks mit Ist-Werten vergleicht und basierend auf diesem Vergleich eine Regulierung des Drucks in den Kammern der Hebevorrichtung vornimmt. Beispielsweise kann kurz vor Erreichen eines zulässigen Maximaldrucks in einem Bereich des anzuhebenden Bereichs eines Flugzeugs das Anheben automatisch unterbrochen werden.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken. Dabei zeigt:
- Figur 1a:: eine schematische Seitenansicht eines Anhebens eines Flugzeugs mit Recovery Jacks nach dem Stand der Technik;
- Figur 1b:: eine perspektivische Ansicht eines Anhebens eines Flugzeugs mit Kränen nach dem Stand der Technik;
- Figur 1c:: eine schematische Frontansicht eines Anhebens eines Flugzeugs mittels aufblasbarer Kissen nach dem Stand der Technik;
- Figur 2:: eine schematische Frontansicht eines Beginns eines Anhebens eines Flugzeugs mittels einer erfindungsgemäßen Hebevorrichtung;
- Figur 3:: eine schematische Frontansicht des Anhebens des Flugzeugs aus Figur 2 während des Anhebens mittels einer erfindungsgemäßen Hebevorrichtung;
- Figur 4:: eine schematische Teilansicht eines Anhebens eines Flugzeugs mittels einer erfindungsgemäßen Hebevorrichtung von vorne;
- Figur 5:: eine schematische Aufsicht auf eine erfindungsgemäße druckempfindliche Einrichtung, wobei ein Ausschnitt eines Drucksensors auf einer Druckmatte im Querschnitt dargestellt ist;
- Figur 6:: eine schematische Aufsicht auf eine weitere erfindungsgemäße druckempfindliche Einrichtung;
- Figur 7:: eine schematische Teilansicht einer erfindungsgemäßen Anzeigeeinrichtung; und
- Figur 8:: eine schematische Ansicht einer erfindungsgemäßen Hebevorrichtung mit einer erfindungsgemäßen Steuerbox.

Anhand von Figur 2 wird im Folgenden ein Anheben eines Bereichs 22 eines Flugzeugs 1 mittels einer erfindungsgemäßen Hebevorrichtung 16 für Flugzeuge beschrieben. Eine erfindungsgemäße Hebevorrichtung 16 umfasst dabei ein erstes aufblasbares Kissen 19, dass unterhalb eines ersten anzuhebenden Bereichs 22 angeordnet ist, im gezeigten Beispiel unterhalb einer Tragfläche des Flugzeugs 1. Das erste Kissen 19 umfasst zumindest zwei Kammern 20, 21, wobei die oberste Kammer 21 insbesondere an die Kontur des anzuhebenden Bereichs 22 anpassbar ist. Um einen gewünschtes Anheben des Flugzeugs auf eine vorbestimmte Höhe sicherstellen zu können, ist das erste Kissen 19 auf einem ersten Unterbau 17 angeordnet, wobei der erste Unterbau 17 beispielsweise mittels eines Holzunterbaus (nicht gezeigt) oder in Form eines weiteren aufblasbaren Kissens bereitgestellt sein kann.

Ein Anheben des Flugzeugs 1 kann dabei mittels Eingabeeinrichtungen 5' manuell durch Öffnen und Schließen von Druckluftventilen reguliert werden, wobei die Eingabeeinrichtungen 5' in diesem ausschließlich beispielhaft zu verstehenden Ausführungsbeispiel direkt mit Schläuchen 9' in Wirkverbindung stehen, so dass das Kissen 19 gezielt mit Druckluft, die durch einen nicht gezeigten Kompressor bereitgestellt wird, beaufschlagt werden kann. Es ist insbesondere erfindungsgemäß auch vorgesehen, dass eine mobile Eingabeeinrichtung (nicht gezeigt) zum Einsatz kommt, um das Anheben des Flugzeugs 1 zu regulieren.

Zwischen der obersten Kammer 21 des ersten Kissens 19 und dem anzuhebenden ersten Bereich 22 wird erfindungsgemäß eine nicht gezeigte druckempfindliche Einrichtung angeordnet.

Neben dem der ersten Hebevorrichtung 16 mit dem ersten aufblasbaren Kissen 19 sind zwei weitere Hebevorrichtungen 16', 16" mit aufblasbaren Kissen 19', 19" unterhalb des Flugzeugs 1 angeordnet. Dabei ist das zweiten Kissen 19' ebenfalls unter der Tragfläche des Flugzeugs 1 angeordnet, das dritte Kissen 19" unter der Nase des Flugzeugs 1. Der dargestellt Aufbau zeigt somit den Fall eines Anhebens des Flugzeugs 1, bei dem sowohl eines der Hauptfahrwerke als auch das vordere Fahrwerk beschädigt ist.

Dabei ist es offensichtlich, dass die Position der anzuhebenden Bereiche 22, 22', 22' in Abhängigkeit eines Flugzeugtyps und der Art des Anhebens bestimmt ist.

Für eine gleichmäßige Übertragung der Kräfte der Kissen 19, 19', 19" auf die anzuhebenden Bereiche 22, 22', 22" des Flugzeugs 1 kann eine Konturenanpassung der obersten Kammern 21, 21', 21" der Kissens 19, 19', 19" an die anzuhebenden Bereiche 22, 22', 22" erfolgen. Die Notwendigkeit einer solchen Konturenanpassung wird insbesondere bei Betrachtung des dritten Kissens 19" deutlich, dass einen dritten Bereich 22" am Rumpf des Flugzeugs 1 anheben soll. Ohne eine Konturenanpassung des dritten Kissens 19" bzw. der obersten Kammer 21" des Kissens 19" wäre eine gleichmäßige Kraftübertragung auf den dritten Bereich 22" nicht möglich. Dabei kann vorgesehen sein, dass die oberste Kammer 21" des dritten Kissens 19" mit einer Vielzahl loser Kunststoffkugeln gefüllt ist. Selbstverständlich ist es auch denkbar, dass anstelle von Kunststoffkugeln beliebige anderen Materialien zum Einsatz kommen, die für eine solche Konturenanpassung geeignet sind. Die oberste Kammer 21" wird für eine Konturenanpassung nicht mit Druckluft beaufschlagt, sondern mittels einer nicht gezeigten Absaugpumpe wird Luft aus der obersten Kammer 21" entfernt und ein Unterdruck erzeugt. Durch den Unterdruck werden die Kunststoffkugeln in ihrer an den anzuhebenden Bereich 22' des Flugzeugs 1 angepassten Form fixiert und bilden eine feste Struktur. Es ist offensichtlich, dass eine solche Konturanpassung gleichsam für das erste und zweite Kissen 19, 19' vorgesehen sein kann.

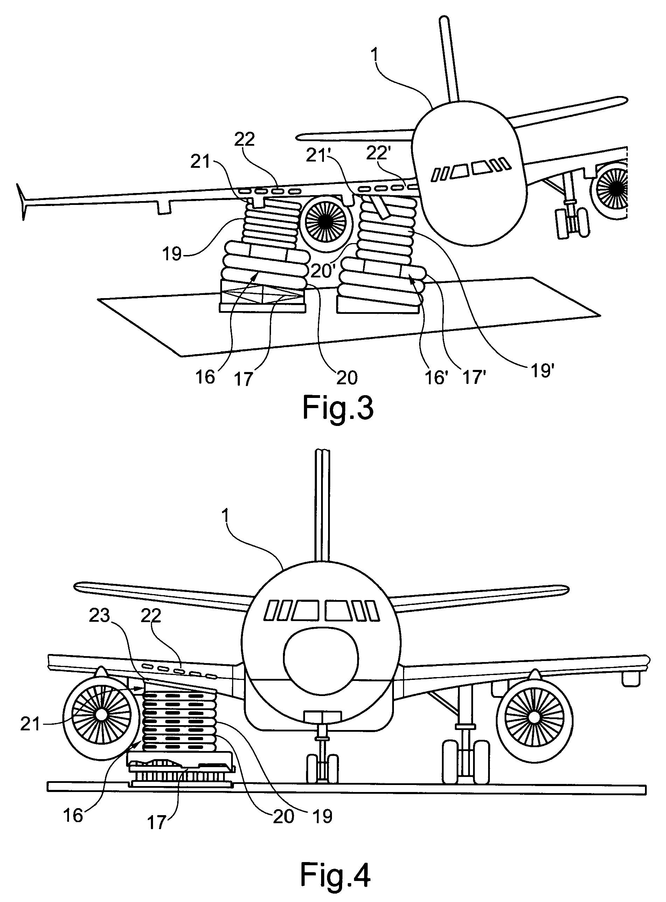

In Figur 3 ist das Flugzeug 1 mit den erfindungsgemäßen Hebevorrichtungen 16, 16' aus Figur 2 während eines Anhebens des Flugzeugs 1 dargestellt. Während des Anhebens des Flugzeugs 1 ist es entscheidend, die Veränderung der Relativposition der Kissen 19, 19' zu den anzuhebenden Bereichen 22, 22' zu berücksichtigen. Aufgrund dieser Änderung der Relativposition des Flugzeugs 1 zu den Kissen 19, 19' kann eine zu große Kraft auf Teilbereiche der anzuhebende Bereiche 22, 22' des Flugzeugs wirken und dieses beschädigen. Grundsätzlich resultiert dabei die Verschiebung der Relativposition aus einer Drehbewegung des Flugzeugs 1 beim Anheben. Wie in Figur 3 dargestellt, verschieben sich die Kissen 19, 19' von einer senkrechten ein eine leicht geneigte Position. Wird die Neigung zu groß, kann dies zu einem Verrutschen der Kissen 19, 19' führen und sogar ein weiteres Anheben des Flugzeugs 1 unmöglich machen, wobei sich insbesondere völlig unterschiedliche Druckverhältnisse über die gesamte Kissenbreite einstellen können. Derartige unterschiedliche Druckverhältnisse sind mit der nachstehend erläuterten druckempfindlichen Einrichtung beherrschbar.

Eine mögliche Kompensation der relativen Verschiebung eines aufblasbaren Kissens 19 der erfindungsgemäßen Hebevorrichtung 16 aus den Figuren 2 und 3 ist in Figur 4 gezeigt. Eine oberste Kammer 21 oder eine der oberen Kammern 20 des Kissens 19 sind dabei in zumindest zwei voneinander getrennte Teilbereiche, also Teilkammern, aufgeteilt (nicht gezeigt). Die nicht gezeigten Teilkammern sind dabei jeweils getrennt voneinander mit Druck beaufschlagbar. Durch ein gezieltes Ansteuern diese Teilkammern kann die relative Verschiebung des Kissens 19 gegenüber dem Bereich 22 durch eine Anpassung der Neigung der in zumindest zwei Teilkammern unterteilte Kammer 21 oder einer der oberen Kammer 20 des Kissen 19 kompensiert werden. Zum Einen kann mit Hilfe der Ansteuerung der Teilkammern des Kissens 19 ein Anheben des Flugzeugs 1 sicher durchgeführt werden und zum Anderen können maximal vorgegebene Druckwerte im anzuhebenden Bereich 22 eingehalten werden. Der Druck wird dabei, wie bereits in den Ausführungsbeispielen gemäß den Figuren 2 und 3 beschrieben, mittels einer druckempfindlichen Einrichtung 23 gemessen, die zwischen der obersten Kammer 21 und dem anzuhebenden Bereich 22 des Flugzeugs 1 angeordnet ist.

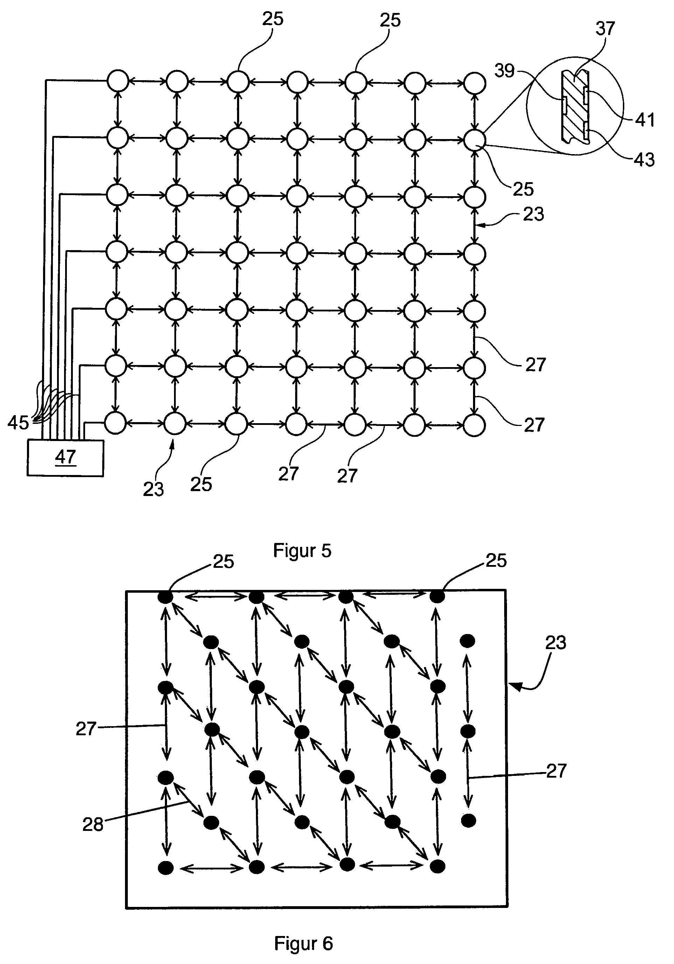

In Figur 5 ist eine schematische Aufsicht auf eine erfindungsgemäße druckempfindliche Einrichtung 23 gezeigt. Die druckempfindliche Einrichtung 23 umfasst dabei eine Vielzahl von Drucksensoren 25, die in einem vorbestimmten Abstand 27 regelmäßig zueinander angeordnet sind. Dabei kann es insbesondere vorgesehen sein, dass der Abstand 27 10 cm beträgt.

Die Figur 5 zeigt auch einen Ausschnitt eines Drucksensors 25 im Querschnitt, der auf einer Druckmatte 37 aus einem flexiblen zusammenpressbaren Kunststoffmaterial, vorzugsweise Siliconkautschuk angeordnet ist. Der Drucksensor 25 besteht aus einem Magneten 39 und einem Hall-Sensor 41, die jeweils gegenüberliegend in die Oberflächen der Druckmatte 37 eingebettet sind. Der Hall Sensor 41 ist wiederum mit einer Sendeeinrichtung 43 (z.B. Bluetooth-Platine mit Bluetooth-Chip) verbunden, die ebenfalls in die Druckmatte 37 eingebettet ist. Die einzelnen Drucksensoren 25 sind über Leitungen 45 mit einem Controller 47 verbunden, der das analoge Signalempfängt und mittels eines A/D-Wandlers in digitale Signale umwandelt, die an die Sendeeinrichtung 43 weitergegeben werden.

In Figur 6 ist eine weitere schematische Aufsicht auf eine erfindungsgemäße druckempfindliche Einrichtung 23 gezeigt. Die druckempfindliche Einrichtung 23 umfasst dabei ebenso eine Vielzahl von Drucksensoren 25, die in einem ersten vorbestimmten Abstand 27 und in einem zweiten vorbestimmten Abstand 28 regelmäßig zueinander angeordnet sind. Dabei kann der erste vorbestimmte Abstand 27 beispielsweise 30 cm betragen und der zweite vorbestimmte Abstand 15 cm, so dass achtundzwanzig Drucksensoren 25 pro Quadratmeter der druckempfindlichen Einrichtung 23 zum Einsatz kommen. Selbstverständlich sind auch verschiedene anderen Anordnungen von Drucksensoren 25 denkbar.

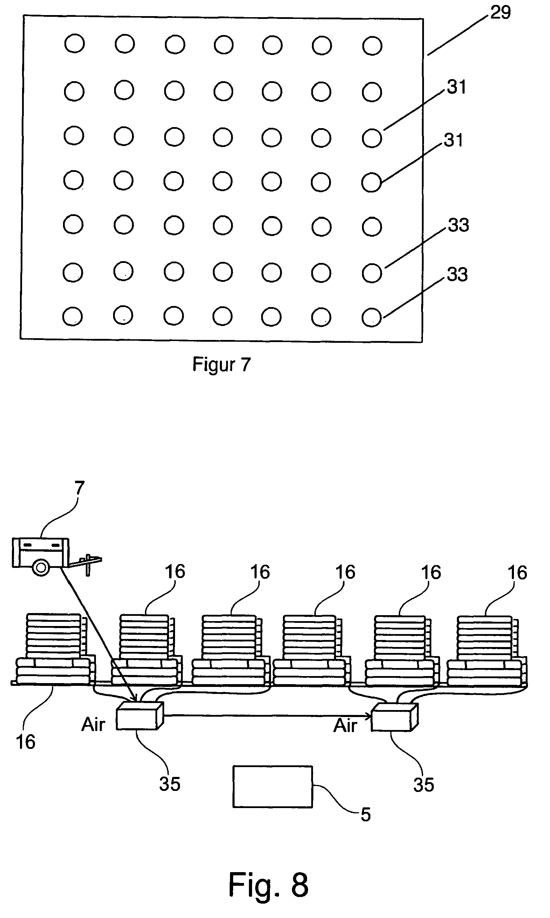

Es kann dabei vorteilhaft sein, wenn die erfindungsgemäße Hebevorrichtung 16, 16', 16" aus den Figuren 2 bis 4 eine Anzeigeeinrichtung 29 entsprechend der Darstellung in Figur 7 umfasst, die zumindest die Repräsentanten 31, 33 von Messwerten der Drucksensoren 25 anzeigt. Dabei kann vorgesehen sein, dass die in Figur 5 dargestellte Anordnung der Drucksensoren 25 mit der Darstellung der angezeigten Repräsentanten 31, 33 der Messwerte auf der Anzeigeeinrichtung 29 korrespondiert. Eine solche Darstellung der einzelnen Repräsentanten 31, 33 kann beispielsweise den Benutzer dabei unterstützen zu entscheiden, welche der Teilkammern der obersten Kammer 21 oder einer der oberen Kammern 20 mit welchem Hub angesteuert werden muss, um ein sicheres und definiertes Anheben des Flugzeugs 1 zu gewährleisten. Dabei können die Repräsentanten 31, 33 der Messwerte der Drucksensoren in Abhängigkeit vorbestimmter Messbereiche farblich dargestellt werden und bei einem Überschreiten von Grenzwerten gewarnt werden. Beispielsweise signalisieren die Repräsentanten 33 einen hohen Druck in einem bestimmten Teilbereich in einem der anzuhebenden Bereiche 22, 22', 22" aus den Figuren 2 bis 4. Dadurch ist es für einen Benutzer leicht erkennbar, welche Ansteuerung er für ein sicheres Anheben vornehmen muss.

Auch kann es vorgesehen sein, dass die Position der druckempfindliche Einrichtung 23 relativ zum Flugzeug auf der Anzeigeeinrichtung 29 angezeigt ist (nicht gezeigt), so dass der Benutzer schnell erkennen kann, in welchem Teilbereich der anzuhebenden Bereiche, beispielsweise der Bereiche 22, 22', 22" aus den Figuren 2 bis 4, gegebenenfalls ein Eingreifen geboten erscheint.

In Figur 8 ist eine erfindungsgemäße Steuerbox 35 gezeigt, die in Wirkverbindung mit einer Eingabeeinrichtung 5, einem Kompressor 7 und einer Hebevorrichtung 16 steht. Die Steuerbox 35 umfasst dabei eine Drucksteuereinrichtung (nicht gezeigt) zum Ansteuern der einzelnen Kammern der Hebevorrichtungen 16. Die Steuerbox 35 ist dafür mittels nicht gezeigter Schläuche mit dem Kompressor 7 und mit den Hebevorrichtungen 16 verbunden. Eine Ansteuerung der Steuerbox 35 kann mittels der Eingabeeinrichtung 5 erfolgen, die, beispielsweise mittels WLAN oder ähnlichen Sende- und Empfangseinrichtung mit der Steuerbox 35 kommuniziert. Dabei kann vorgesehen sein, dass die Steuerbox 35 Steuerventile, insbesondere Magnetventile, umfasst und sowohl einen positiven Druck zum Befüllen der Kammern als auch einen negativen Druck zum Entleeren derselben bereitstellt. Des Weiteren kann es erfindungsgemäß vorgesehen sein, dass die Steuerbox 35 nicht gezeigte Notbedienungseinrichtungen umfasst, um die Steuerventile auch direkt an der Steuerbox bedienen zu können. Die von der Steuerbox 35 vorgenommene Ansteuerung der Hebevorrichtungen 16 wird mittels einer Software gesteuert. Dabei kann eine SPS - Steuerung zum Betrieb der Steuerbox 35 vorgesehen sein.

Der Einsatz einer erfindungsgemäßen Steuerbox 35 geht mit einer Vielzahl von Vorteilen einher. Es kann ein einfacherer Aufbau der notwendigen Komponenten für ein Anheben eines Flugzeugs ermöglich werden, da weniger Schlauchmaterial als im Stand der Technik zum Einsatz kommen kann. Die Steuerbox 35 kann in der Nähe der Hebevorrichtungen 16 angeordnet sein, und aufgrund des Einsatzes der bevorzugt von der Steuerbox 35 getrennt angeordneten Eingabeeinrichtung 5 kann trotzdem der notwendige Sicherheitsabstand eingehalten werden. Zudem können mehrere Hebevorrichtungen 16 mittels einer Steuerbox 35 angesteuert werden, so dass gleichsam die benötigte Menge an Schlauchmaterial reduziert werden kann, da die Steuerbox 35 auch in der Nähe von zwei oder mehreren Hebevorrichtungen 16 platziert werden kann. Dies kann Zeit und Personal sowohl beim Aufbau als auch beim Betrieb sparen. Auch kann ein koordinierter Betrieb von mehreren Hebevorrichtungen 16 gleichzeitig mittels einer erfindungsgemäßen Steuerbox 35 erfolgen, insbesondere mittels der in der Steuerbox 35 bereitgestellten Software zum Steuern des Anhebens eines Flugzeugs.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Flugzeug
- 3: Recovery Jack
- 4: Hydraulikaggregat
- 5: Eingabeeinrichtung
- 6: Generator
- 7: Kompressor
- 9, 9': Schlauch
- 11: Kran
- 13: Ausleger
- 15: Schlaufe
- 16: Hebevorrichtung
- 17, 17', 17": Unterbau
- 19, 19', 19": Kissen
- 20, 20', 20", 21, 21', 21": Kammer
- 22, 22', 22": Bereich
- 23: druckempfindliche Einrichtung
- 25: Drucksensor
- 27, 28: Abstand
- 29: Anzeigeeinrichtung
- 31, 33: Repräsentant
- 35: Steuerbox
- 37: Druckmatte
- 39: Magnet
- 41: Hall-Sensor
- 43: Sendeeinrichtung
- 45: Leitung
- 47: Controller

## Patentansprüche

1. Hebevorrichtung (16, 16', 16") für ein Flugzeug (1), umfassend zumindest ein aufblasbares Kissen (19, 19', 19") mit mindestens zwei Kammern (20, 20', 20", 21, 21', 21"), wenigstens einen Kompressor (7), zumindest eine Drucksteuereinrichtung, wobei jede der Kammern (20, 20', 20", 21, 21', 21") mittels eines Schlauchs (9, 9') über die Drucksteuereinrichtung mit dem Kompressor (7) verbunden ist, und eine druckempfindliche Einrichtung (23) mit zumindest zwei Drucksensoren (25), die zwischen der obersten Kammer (20, 20', 20", 21, 21', 21") des Kissens (19, 19', 19") und dem anzuhebenden Bereich (22, 22', 22") des Flugzeugs (1) angeordnet ist, **dadurch gekennzeichnet, dass** die druckempfindliche Einrichtung (23) aus einer Matte und/oder einem folienartigen Material besteht und die Drucksensoren (25) in vorbestimmten, regelmäßigen Abständen (27, 28) auf der druckempfindlichen Einrichtung (23) angeordnet sind.

2. Hebevorrichtung nach Anspruch 1, **dadurch gekennzeichnet, dass** die Drucksensoren (25) in einem Bereich von 5 cm bis 50 cm, vorzugsweise einem Bereich vom 10 cm bis 30 cm angeordnet sind.

3. Hebevorrichtung nach einem der vorangehenden Ansprüche, **dadurch gekennzeichnet, dass** zumindest einer der Drucksensoren (25) ein druckempfindliches, piezoresistives Sensorelement umfasst, wobei vorzugsweise der Drucksensor (25) aus einer dünnen, bedruckten Schaltung besteht, und wobei der Drucksensor (25) insbesondere zwei Substratschichten umfasst, vorzugsweise eine Substratschicht aus Polyester und eine Substratschicht aus Polyimid.

4. Hebevorrichtung nach einem der Ansprüche 1 oder 2, **dadurch gekennzeichnet, dass** die druckempfindliche Einrichtung (23) zumindest bereichsweise aus einem kompressiblen Material besteht und zumindest zwei Magnete oder magnetischen Partikel umfasst, wobei die Magneten oder magnetischen Partikeln durch eine Kompression oder Ausdehnung der druckempfindlichen Einrichtung (23) bewegt werden, so dass eine Änderung des durch die Magneten oder magnetischen Partikeln erzeugten Magnetfeldes auftritt, wobei diese Änderungen repräsentativ für eine Veränderung des Drucks beim Anheben des Flugzeugs (1) ist.

5. Hebevorrichtung nach Anspruch 4, **dadurch gekennzeichnet, dass** zumindest ein Magnetsensor umfasst ist, um die Veränderung des magnetischen Feldes zu messen, wobei die Magnete oder magnetischen Partikel und der Magnetsensor insbesondere einen Drucksensor (25) ausbilden, und wobei vorzugsweise die druckempfindliche Einrichtung (23) eine geschäumte Matte oder dergleichen umfasst, wobei der Schaum die Magneten oder magnetischen Partikeln umfasst.

6. Hebevorrichtung nach einem der vorangehenden Ansprüche, **dadurch gekennzeichnet, dass** eine Datenverarbeitungseinrichtung Messwerte der druckempfindlichen Einrichtung (23), insbesondere der Drucksensoren (25) der druckempfindliche Einrichtung (23), eine aktuelle Uhrzeit, ein Datum, eine Temperatur, eine Benutzerkennung, einen Flugzeugtyp und/oder weitere Informationen speichert, wobei vorzugsweise mittels der Datenverarbeitungseinrichtung Informationen über Kennzahlen und -werte verschiedener Flugzeugtypen bereitgestellt werden können und insbesondere die Messwerte der druckempfindlichen Einrichtung (23) mit den Kennzahlen und - werten abgeglichen werden.

7. Hebevorrichtung nach einem der vorangehenden Ansprüche, **dadurch gekennzeichnet, dass** eine Eingabeeinrichtung (5) zur Ansteuerung der Drucksteuereinrichtung umfasst ist, wobei vorzugsweise mit der Eingabeeinrichtung (5) zumindest zwei getrennte Drucksteuereinrichtungen angesteuert werden können und vorzugsweise als mobile Eingabeeinrichtung (5) ausgebildet ist, die drahtlos mit der oder den Drucksteuereinrichtungen kommuniziert.

8. Hebevorrichtung nach einem der vorangehenden Ansprüche, **dadurch gekennzeichnet, dass** eine Anzeigeeinrichtung (29) umfasst ist, die zumindest einen Repräsentanten (31, 33) eines Messwerts zumindest eines Drucksensors (25) der druckempfindliche Einrichtung (23) anzeigt, wobei vorzugsweise die Anordnung der angezeigten Repräsentanten (31, 33) der Messwerte der Drucksensoren (25) auf der Anzeigeeinrichtung (29) mit der räumlichen Anordnung der Drucksensoren (25) in der druckempfindliche Einrichtung (23) korrespondiert.

9. Hebevorrichtung nach Anspruch 8, **dadurch gekennzeichnet, dass** ein akustisches und/oder optisches Warnsignal mittels der Anzeigeeinrichtung (29) oder einer weiteren Ausgabeeinrichtung ausgegeben wird, wenn ein Messwert des Drucks einen vorgegeben maximal zulässigen Wert überschreitet, wobei vorzugsweise das Anheben des Flugzeugs (1) kurz vor einem Überschreiten des zulässigen Werts automatisch unterbrochen ist.

10. Hebevorrichtung nach Anspruch 8 oder 9, **dadurch gekennzeichnet, dass** die Repräsentanten (31, 33) der Messwerte der Drucksensoren (25) der druckempfindliche Einrichtung (23) farbig auf der Anzeigeeinrichtung (29) angezeigt sind, wobei insbesondere die Repräsentanten (31, 33) der Messwerte in Abhängigkeit vorbestimmter Messbereiche in Grün, Gelb oder Rot angezeigt werden.

11. Hebevorrichtung nach einem der Ansprüche 8 bis 10, **dadurch gekennzeichnet, dass** die Position der druckempfindliche Einrichtung (23) relativ zum Flugzeug (1) auf der Anzeigeeinrichtung (29) angezeigt ist, insbesondere die Position aller druckempfindlicher Einrichtungen (23).

12. Hebevorrichtung nach einem der Ansprüche 8 bis 11, **dadurch gekennzeichnet, dass** die Anzeigeeinrichtung (29) mit der Eingabeeinrichtung (5) in einem ausgebildet ist, insbesondere in Form eines Touchscreens, eines Tablet-PCs oder dergleichen.

13. Hebevorrichtung nach einem der Ansprüche 8 bis 12, **gekennzeichnet durch** eine Steuerbox (35) mit einer Steuersoftware, die zwischen dem Kompressor (7) und zumindest einer der Hebevorrichtungen (16) angeordnet ist, und die Drucksteuereinrichtung, vorzugsweise in Form von Steuerventilen, insbesondere Magnetventilen, aktiviert, wobei die Steuerbox (35) vorzugsweise eine Notbedienungseinrichtung aufweist.

## Claims

1. A lifting apparatus (16, 16', 16") for an aircraft (1), comprising at least one inflatable cushion (19, 19', 19") with at least two chambers (20, 20', 20", 21, 21', 21"), at least one compressor (7), at least one pressure control device, wherein each of the chambers (20, 20', 20", 21, 21', 21") is connected to the compressor (7) via the pressure control device by means of a hose (9, 9'), and a pressure-sensitive device (23) with at least two pressure sensors (25), which is arranged between the uppermost chamber (20, 20', 20", 21, 21', 21") of the cushion (19, 19', 19") and the area (22, 22', 22") of the aircraft (1) which is to be lifted, **characterized in that** the pressure-sensitive device (23) consists of a mat and/or a film-like material, and the pressure sensors (25) are arranged at preset regular intervals (27, 28) on the pressure-sensitive device (23).

2. The lifting apparatus according to Claim 1, **characterized in that** the pressure sensors (25) are arranged in a range from 5 cm to 50 cm, preferably a range from 10 cm to 30 cm.

3. The lifting apparatus according to one of the preceding claims, **characterized in that** at least one of the pressure sensors (25) comprises a pressure-sensitive, piezo-resistive sensor element, wherein the pressure sensor (25) preferably consists of a thin printed circuit, and wherein the pressure sensor (25) comprises, in particular, two substrate layers, preferably a substrate layer made of polyester and a substrate layer made of polyimide.

4. The lifting apparatus according to one of Claims 1 or 2, **characterized in that** the pressure-sensitive device (23) consists at least in certain regions of a compressible material and comprises at least two magnets or magnetic particles, wherein the magnets or magnetic particles are moved by a compression or expansion of the pressure-sensitive device (23), so that a change in the magnetic field which is generated by the magnets or magnetic particles occurs, wherein these changes are representative of a change in the pressure during the lifting of the aircraft (1).

5. The lifting apparatus according to Claim 4, **characterized in that** at least one magnetic sensor is included in order to measure the change in the magnetic field, wherein the magnets or magnetic particles and the magnetic sensor form, in particular, a pressure sensor (25), and wherein the pressure-sensitive device (23) preferably comprises a foamed mat or suchlike, wherein the foam comprises the magnets or magnetic particles.

6. The lifting apparatus according to one of the preceding claims, **characterized in that** a data processing device stores measured values of the pressure-sensitive device (23), in particular of the pressure sensors (25) of the pressure-sensitive device (23), a current time, a date, a temperature, a user identification, an aircraft type and/or further information, wherein information about characteristic numbers and - values of various aircraft types can preferably be provided by means of the data processing device, and in particular the measured values of the pressure-sensitive device (23) are reconciled with the characteristic numbers and -values.

7. The lifting apparatus according to one of the preceding claims, **characterized in that** an input device (5) for actuating the pressure control device is included, wherein at least two separate pressure control devices can preferably be actuated with the input device (5), and is preferably embodied as a mobile input device (5) which communicates wirelessly with the pressure control device or devices.

8. The lifting apparatus according to one of the preceding claims, **characterized in that** a display device (29) is included which displays at least one representative (31, 33) of a measured value of at least one pressure sensor (25) of the pressure-sensitive device (23), wherein the arrangement of the displayed representatives (31, 33) of the measured values of the pressure sensors (25) on the display device (29) preferably corresponds to the spatial arrangement of the pressure sensors (25) in the pressure-sensitive device (23).

9. The lifting apparatus according to Claim 8, **characterized in that** an acoustic and/or visual warning signal is emitted by means of the display device (29) or a further output device if a measured value of the pressure exceeds a predetermined maximum permissible value, wherein the lifting of the aircraft (1) is preferably interrupted automatically shortly before an exceeding of the permissible value.

10. The lifting apparatus according to Claim 8 or 9, **characterized in that** the representatives (31, 33) of the measured values of the pressure sensors (25) of the pressure-sensitive device (23) are displayed in colour on the display device (29), wherein in particular the representatives (31, 33) of the measured values are displayed in green, yellow or red as a function of preset measurement ranges.

11. The lifting apparatus according to one of Claims 8 to 10, **characterized in that** the position of the pressure-sensitive device (23) relative to the aircraft (1) is displayed on the display device (29), in particular the position of all the pressure-sensitive devices (23).

12. The lifting apparatus according to one of Claims 8 to 11, **characterized in that** the display device (29) is embodied integrally with the input device (5), in particular in the form of a touchscreen, a tablet PC or suchlike.

13. The lifting apparatus according to one of Claims 8 to 12, **characterized by** a control box (35) with a control software, which is arranged between the compressor (7) and at least one of the lifting apparatuses (16), and which activates the pressure control device, preferably in the form of control valves, in particular solenoid valves, wherein the control box (35) preferably has an emergency operating device.

## Revendications

1. Dispositif de levage (16, 16', 16") pour un avion (1), comportant au moins un coussin (19, 19', 19") gonflable avec au moins deux chambres (20, 20', 20", 21, 21', 21"), au moins un compresseur (7), au moins un système de contrôle de la pression, chacune des chambres (20, 20', 20", 21, 21', 21") étant reliée au moyen d'un flexible (9, 9') par l'intermédiaire du système de contrôle de la pression avec le compresseur (7) et avec un système (23) sensible à la pression avec au moins deux capteurs de pression (25) qui sont placés entre la chambre supérieure (20, 20', 20", 21, 21', 21") du coussin (19, 19', 19") et la région (22, 22', 22") qui doit être levée du l'avion (1), **caractérisé en ce que** le système (23) sensible à la pression est constitué d'une natte et/ou d'une matière du type d'un film et les capteurs de pression (25) sont placés à des écarts (27, 28) réguliers prédéfinis sur le système (23) sensible à la pression.

2. Dispositif de levage selon la revendication 1, **caractérisé en ce que** les capteurs de pression (25) sont placés dans un ordre de 5 cm à 50 cm, de préférence dans une ordre de 10 cm à 30 cm.

3. Dispositif de levage selon l'une quelconque des revendications précédentes, **caractérisé en ce qu'**au moins l'un des capteurs de pression (25) comporte un élément capteur piézorésistif, sensible à la pression, le capteur de pression (25) étant constitué de préférence d'un circuit imprimé mince et le capteur de pression (25) comportant au moins deux couches de substrat, de préférence une couche de substrat en polyester et une couche de substrat en polyimide.

4. Dispositif de levage selon l'une quelconque des revendications 1 ou 2, **caractérisé en ce que** le système (23) sensible à la pression est constitué au moins par régions d'une matière compressible et comporte au moins deux aimants ou particules magnétiques, les aimants ou particules magnétiques étant déplacé(e)s par une compression ou une expansion du système (23) sensible à la pression, de sorte à donner naissance à une modification du champ magnétique généré par les aimants ou les particules magnétiques, ladite modification étant représentative d'une modification de la pression lors du levage de l'avion (1).

5. Dispositif de levage selon la revendication 4, **caractérisé en ce qu'**au moins un capteur magnétique est compris pour mesurer la modification du champ magnétique, les aimants ou particules magnétiques et la capteur magnétique formant notamment un capteur de pression (25) et de préférence le système (23) sensible à la pression comportant une natte expansée ou similaire, la mousse englobant les aimants ou les particules magnétiques.

6. Dispositif de levage selon l'une quelconque des revendications précédentes, **caractérisé en ce qu'**un système de traitement de données mémorise des valeurs mesurées du système (23) sensible à la pression, notamment des capteurs de pression (25) du système (23) sensible à la pression, une heure actuelle, une date, une température, une identification de l'utilisateur, un type d'avion et/ou des informations supplémentaires, des informations sur des valeurs indicatives et des valeurs caractéristiques de différents types d'avions pouvant être mis à disposition de préférence au moyen du système de traitement de données et notamment les valeurs mesurées du système (23) sensible à la pression étant compensées avec les valeurs indicatives et valeurs caractéristiques.

7. Dispositif de levage selon l'une quelconque des revendications précédentes, **caractérisé en ce qu'**un système de saisie (5) pour activer le système de contrôle de la pression est compris, de préférence avec le système de saisie (5), au moins deux systèmes de contrôle de la pression pouvant être activés et celui-ci étant conçu de préférence sous la forme d'un système de saisie (5) mobile qui communique sans fil avec le ou les système(s) de contrôle de la pression.

8. Dispositif de levage selon l'une quelconque des revendications précédentes, **caractérisé en ce qu'**un système d'affichage (29) est compris, qui affiche au moins un représentant (31, 33) d'une valeur mesurée d'au moins un capteur de pression (25) du système (23) sensible à la pression, de préférence la disposition des représentants (31, 33) affichés correspondant aux valeurs mesurées des capteurs de pression (25) sur le système d'affichage (29) avec la disposition dans l'espace des capteurs de pression (25) dans le système (23) sensible à la pression.

9. Dispositif de levage selon la revendication 8, **caractérisé en ce qu'**un signal d'alerte acoustique et/ou optique est délivré au moyen du système d'affichage (29) ou d'un système d'édition supplémentaire lorsqu'une valeur mesurée de la pression dépasse une valeur maximale autorisée prédéfinie, de préférence le levage de l'avion (1) étant automatiquement interrompu peu avant le dépassement de la valeur autorisée.

10. Dispositif de levage selon la revendication 8 ou la revendication 9, **caractérisé en ce que** les représentants (31, 33) des valeurs mesurées des capteurs de pression (25) du système (23) sensible à la pression sont affichés en couleur sur le système d'affichage (29), notamment les représentants (31, 33) des valeurs mesurées étant affichés en vert, en jaune ou en rouge en fonction de plages de mesures prédéfinies.

11. Dispositif de levage selon l'une quelconque des revendications 8 à 10, **caractérisé en ce que** la position du système (23) sensible à la pression par rapport à l'avion (1), notamment la position de tous les systèmes (23) sensibles à la pression est affichée sur le système d'affichage (29).

12. Dispositif de levage selon l'une quelconque des revendications 8 à 11, **caractérisé en ce que** le système d'affichage (29) est conçu en monobloc avec le système de saisie (5), notamment sous la forme d'un écran tactile, d'une tablette informatique ou similaires.

13. Dispositif de levage selon l'une quelconque des revendications 8 à 12, **caractérisé par** une boîte de commande (35) avec un logiciel de commande, qui est placée entre le compresseur (7) et au moins l'un des dispositifs de levage (16) et active le système de contrôle de la pression de préférence sous la forme de vannes-pilotes, notamment d'électrovannes, la boîte de commande (35) comportant de préférence un système de manipulation d'urgence.
